# EUROPEAN PATENT SPECIFICATION

(11) **EP 1 370 918 B1**
(45) Date of publication and mention of the grant of the patent: **26.03.2008**
(21) Application number: 01992347.3
(22) Date of filing: 20.12.2001
(51) Int. Cl.: G06F 1/00

(54) **SOFTWARE-BASED FAULT TOLERANT NETWORKING USING A SINGLE LAN**
SOFTWARE-BASIERTES FEHLERTOLERANTES NETZ UNTER VERWENDUNG EINES EINZELNEN LAN
RESEAU INSENSIBLE AUX PANNES MIS EN OEUVRE PAR LOGICIEL UTILISANT UN RLE SIMPLE

(30) Priority: 29.12.2000 US 751945
(43) Date of publication of application: 17.12.2003
(73) Proprietor: Honeywell International Inc., Morristown, NJ 07960 (US)
(72) Inventor: HUANG, Jiandong, San Jose, CA 95135 (US); KOZLIK, Tony, John, Phoenix, AZ 85027 (US); SONG, Sejun, Cupertino, CA 95014 (US); DAHL, John, M., Grand Forks, ND 58201 (US); CLAWSON, Laurence, Arthur, Cave Creek, AZ 85327 (US); LUNEMANN, Christopher, Carbon, PA 18229 (US); GUSTIN, Jay, W., Scottsdale, AZ 85254 (US); FREIMARK, Ronald, J., Scottsdale, AZ 85254 (US)
(74) Representative: Hucker, Charlotte Jane
(86) International application number: PCT/US2001/050222
(87) International publication number: WO 2002/054179

(56) References cited:
- WO-A-00/28715
- US-A- 5 925 137
- US-A- 6 058 116
- US-A- 6 088 330
- US-B1- 6 308 282
- HUANG J ET AL: "an open solution to fault-tolerant Ethernet: design, prototyping, and" 1999 IEEE INTERNATIONAL PERFORMANCE, COMPUTING AND COMMUNICATIONS CONFERENCE. PHOENIX, AZ, FEB. 10 - 12, 1999, IEEE INTERNATIONAL PERFORMANCE, COMPUTING AND COMMUNICATIONS CONFERENCE, NEW YORK, NY: IEEE, US, 12 February 1999 (1999-02-12), pages 461-468, XP002130386 ISBN: 0-7803-5259-9

## Description

The invention relates generally to computer networks, and more specifically to a method and apparatus providing communication between network nodes via one or more intermediate nodes in a fault-tolerant network.

Computer networks have become increasingly important to communication and productivity in environments where computers utilized for work. Electronic mail has in many situations replaced paper mail and faxes as a means of distribution of information, and the availability of vast amounts of information on the Internet has become an invaluable resource both for many work-related and personal tasks. The ability to exchange data over computer networks also enables sharing of computer resources such as printers in a work environment, and enables centralized network-based management of the networked computers.

For example, an office worker's personal computer may run software that is installed and updated automatically via a network, and that generates data that is printed to a networked printer shared by people in several different offices. The network may be used to inventory the software and hardware installed in each personal computer, greatly simplifying the task of inventory management. Also, the software and hardware configuration of each computer may be managed via the network, making the task of user support easier in a networked environment.

Networked computers also typically are connected to one or more network servers that provide data and resources to the networked computers. For example, a server may store a number of software applications that can be executed by the networked computers, or may store a database of data that can be accessed and utilized by the networked computers. The network servers typically also manage access to certain networked devices such as printers, which can be utilized by any of the networked computers. Also, a server may facilitate exchange of data such as e-mail or other similar services between the networked computers.

Connection from the local network to a larger network such as the Internet can provide greater ability to exchange data, such as by providing Internet e-mail access or access to the World Wide Web. These data connections make conducting business via the Internet practical, and have contributed to the growth in development and use of computer networks. Internet servers that provide data and serve functions such as e-commerce, streaming audio or video, e-mail, or provide other content rely on the operation of local networks as well as the Internet to provide a path between such data servers and client computer systems.

But like other electronic systems, networks are subject to failures. Misconfiguration, broken wires, failed electronic components, and a number of other factors can cause a computer network connection to fail, leading to possible inoperability of the computer network. Such failures can be minimized in critical networking environments such as process control, medical, or other critical applications by utilization of backup or redundant network components. One example is use of a second network connection to critical network nodes providing the same function as the first network connection. But, management of the network connections to facilitate operation in the event of a network failure can be a difficult task, and is itself subject to the ability of a network system or user to properly detect and compensate for the network fault. Furthermore when both a primary and redundant network develop faults, exclusive use of either network will not provide full network operability.

One solution is use of a method or apparatus that can detect and manage the state of a network of computers utilizing redundant communication channels. Such a system incorporates in various embodiments nodes which are capable of detecting and managing the state of communication channels between the node and each other fault-tolerant network node to which it is connected. In some embodiments, such network nodes employ a network status data record indicating the state of each of a primary and redundant network connection to each other node, and further employ logic enabling determination of an operable data path to send and receive data between each pair of nodes. Other examples of prior art methods include US-A-6088330, US-A-5925137 and HUANG J et al, "An Open Solution to Fault-tolerant Ethernet: Design, Prototyping, and Evaluation" XP002130386. WO-A-0028715 discloses a fault tolerant network with failure detection.

But, such networks will desirably include nodes which do not have full fault-tolerant capability. One common example of such a non-fault-tolerant network node is a standard office laser printer with a built-in network connection. What is needed is a method and apparatus to facilitate communication with both non-fault-tolerant and fault-tolerant network nodes in a fault-tolerant network system.

The present invention provides a method of managing the state of a computer network comprising fault-tolerant network nodes, the method comprising the steps of:
determining in each fault-tolerant node the state of a first link between each of the fault-tolerant nodes and other network nodes;
determining in each fault-tolerant node the state of a second link between each of the fault-tolerant nodes and other network nodes;
receiving data from an originating node in a first fault-tolerant intermediate node; and characterised by the step of:
   selecting in the first fault-tolerant intermediate node either the first link or the second link from the first fault-tolerant intermediate node to a destination node for sending data, wherein at least one of the first link and second link is linked other than directly to the originating node, such that the link is selected by the intermediate node based on the network states determined independently for each fault-tolerant node.

In some further embodiments of the invention, fault-tolerant nodes contain network status tables that indicate the ability of the fault tolerant node to receive data from and transmit data to other nodes via each of the links connected to the fault-tolerant nodes.

In the Drawings;
Figure 1 shows a diagram of a network having fault-tolerant nodes as may be used to practice the present invention.
Figure 2 shows a network status table, consistent with an embodiment of the present invention.
Figure 3 is a flowchart of a method of operating a network having fault-tolerant intermediate nodes, consistent with an embodiment of the present invention.

In the following detailed description of sample embodiments of the invention, reference is made to the accompanying drawings which form a part hereof; and in which is shown by way of illustration specific sample embodiments in which the invention may be practised.

The present invention provides a method and apparatus for managing communication with non-fault-tolerant network nodes and fault-tolerant nodes in a fault-tolerant network by using intermediate nodes to route network data around network faults. The network in some embodiments comprises both fault-tolerant and non-fault tolerant nodes, and can route data between nodes using fault-tolerant nodes as intermediate nodes that are capable of routing data around network faults.

The invention in various forms is implemented within an existing network interface technology, such as Ethernet. In one such embodiment, two Ethernet connections are connected to each fault-tolerant computer or node. It is not critical for purposes of the invention to distinguish the connections from one another, as the connections are physically and functionally similar. The network with fault-tolerant intermediate nodes as described herein may also contain a number of non-fault tolerant nodes that may originate or receive data by using the fault-tolerant nodes as intermediate nodes, which are capable of routing data around network faults as described herein.

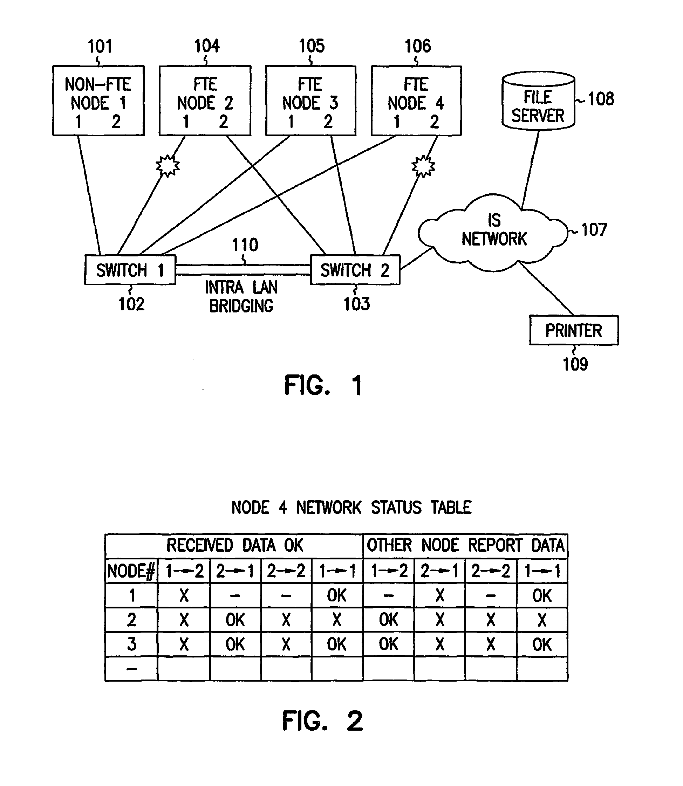

Figure 1 shows a example network comprising a non-fault tolerant node 101, switches 102 and 103, and fault-tolerant nodes 104, 105 and 106. The two switches 102 and 103 are further linked by intra LAN bridge connection 110. These seven elements make up a local area network that is further connected to a network 107, which is connected to a file server 108 and a printer 109. The non-fault tolerant node 101 may be a printer, computer, or other device in a fault-tolerant network that does not support fault tolerance via multiple network connections.

Each of the fault-tolerant nodes 104, 105 and 106 will store network status data such as via the network status table as is shown in Figure 2. From the data in the network status tables such as the network status table of Figure 2, the state of the various network connections can be determined and a suitable connection for communication between each pair of network nodes can be selected. The network status table in Figure 2 reflects network status data for node 4 of the example network shown in Figure 1, and indicates the condition of communication links between node 4 and other nodes in the network.

The data in the "Received Data OK" columns reflects whether node 4 can successfully receive data from each of the other nodes in the network over each of links 1 and 2 for both nodes. An "X" in the table indicates data is not received, an "OK" indicates data is received, and a "-" indicates that such a link does not exist. Also, each column indicates which links the data travels over, such that from link 2 of the sending node to link 1 of the receiving node would be designated "2->1". For example, the "X" in the "Received Data OK" table under Node 1, "1->2" indicates that data leaving node 1 via link 1 and entering node 4 via link 2 cannot be received. Also, the dashes under Node 1 in both the "2→1" and the "2->2" are a result of there not being a link 2 in node 1. Finally, the "OK" under Node 1, "1->1" indicates that communication from node 1, link 1 to node 4, link 1 is OK.

This example embodiment of the invention also has an "Other Node Report Data" table section that essentially restates the data in the "Received Data OK" section of the table in different terms. The "Other Node Report Data" section reflects data as reported by other nodes, as the data exists in the other nodes' "Received Data OK" tables. However, the data reported by the other nodes is in this example also fully reflected in the "Received Data OK" section of the table for node 4. For example, the "Other Node Report Data" for node 1 indicates the same data as is recorded in the "Received Data OK" section of the same table, with the links reversed because the data is from the perspective of and provided by node 1.

In some embodiments of the invention where links may be able to send but not receive or may receive but not send data, the contents of the "Other Node Report Data" table may differ from the "Received Data OK" table, as data may be able to travel in one direction via a certain pair of links but not in the opposite direction. Such embodiments benefit greatly from having both "Received Data OK" data and "Other Node Report Data", and are within the scope of the invention.

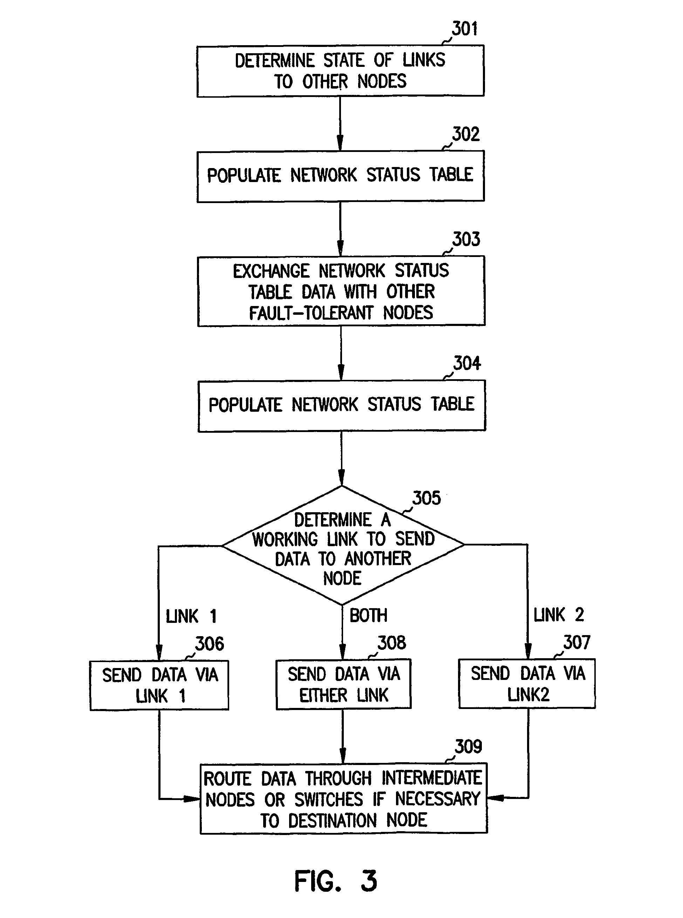

Using this Network Status Table data, each node can route data around many network faults and communicate despite multiple failed links. Figure 3 is a flowchart of a method that illustrates how the network status table may be employed in practicing the present invention. At 301, the node desiring to send data determines the state of its network connection to other nodes. At 302, the node uses the data regarding the state of its network connections to other nodes to populate the "Received Data OK" portion of its network status table. The node then exchanges this data with other nodes at 303, and populates the "Other Node Report Data" portion of its network status table at 304.

The determination of whether a node can receive data from another node is made in various embodiments using special-purpose diagnostic data signals, using network protocol signals, or using any other suitable type of data sent between nodes. The data each node provides to other nodes to populate the "Other Node Report Data" must necessarily be data which includes the data to be communicated between nodes, and is in one embodiment a special-purpose diagnostic data signal comprising the node data to be reported.

At 305, the fault-tolerant node determines which of its links are operable to send data to the intended node. If only a first link is operable, data is sent via the first link at 306. If only a second link is operable, data is sent via the second link at 307. Typically, both links will be operable, and the data may be sent via either link, chosen by any appropriate method such as by availability or at random, at 308.

Finally, the data is sent via the selected link, and may be routed through intermediate nodes or switches to reach its ultimate destination if the network topology so requires. The intermediate nodes or switches may in various embodiments of the invention be routers or bridges, or any other device able to provide a similar function within the network.

As an example, suppose that node 4 of Figure 1 shown at 106 desires to send data to node 1 at 101. The network status table has been populated as is shown in Figure 2 by evaluating which nodes can receive data from which other nodes, and exchanging this data among nodes. At 305, it is determined by looking at the "Other Node Report Data" section of the network status table of Figure 2 that there is not a second link connected to node 1, and that data sent from link 2 of node 4 does not reach node 1. The table does reflect that data sent from link 1 of node 1 reaches node 4, and so the data is sent via link 1 at 306. At 309, the data is routed through switch 1 shown at 102 of Figure 1 to node 1, where it is received via its only link, link 1.

The present invention provides a method and apparatus for managing communication between non-fault-tolerant network nodes and fault-tolerant nodes in a fault-tolerant network by using a network status table to route network data around network faults, including the use of intermediate network nodes. The network in some embodiments comprises both fault-tolerant and non-fault tolerant nodes, and can route data between nodes using fault-tolerant intermediate nodes or switches that are capable of routing data around network faults.

Although specific embodiments have been illustrated and described herein, it will be appreciated by those of ordinary skill in the art that any arrangement which is calculated to achieve the same purpose may be substituted for the specific embodiments shown. This application is intended to cover any adaptations or variations of the invention. It is intended that this invention be limited only by the claims, and the full scope of equivalents thereof.

## Claims

1. A method of managing the state of a computer network comprising fault-tolerant network nodes (102, 103, 104, 105, 106), the method comprising the steps of:
determining in each fault-tolerant node the state of a first link between each of the fault-tolerant nodes and other network nodes;
determining in each fault-tolerant node the state of a second link between each of the fault-tolerant nodes and other network nodes;
receiving data from an originating node in a first fault-tolerant intermediate node; and **characterised by** the step of:
selecting in the first fault-tolerant intermediate node either the first link or the second link from the first fault-tolerant intermediate node to a destination node for sending data, wherein at least one of the first link and second link is linked other than directly to the originating node, such that the link is selected by the intermediate node based on the network states determined independently for each fault-tolerant node.

2. The method of claim 1, wherein the first fault-tolerant intermediate node is a switch (102,103).

3. The method of claim 1, further comprising the step of building an independent network status table in each fault-tolerant node (102,103,104,105,106) that indicates results of determining the state of the first and second link between that node and other network nodes.

4. The method of claim 3, wherein the network status table comprises data representing network status based on data receive at a fault tolerant network node (102,103,104,105,106) from other network nodes.

5. The method of claim 1, wherein the step of determining the state of a first and second link from fault-tolerant nodes (102,103,104,105,106) comprises determining whether each node connected to a fault-tolerant node can send data to the fault-tolerant node and can receive data from the fault-tolerant node over each of the first and second links:

6. A fault-tolerant computer network interface for a first fault-tolerant intermediate node, the interface arranged to operate to:
determine the state of a first link between the interface and other network nodes;
determine the state of a second link between the interface and other network nodes;
receive data from an originating node; and **characterised by** being arranged to:
select either the first link or the second link from the interface to a destination node for sending data, wherein at least one of the first and second link is linked other than directly to the originating node, such that the link is selected based on the determined state of each link.

7. The fault-tolerant computer network interface of claim 6, wherein the first fault-tolerant intermediate node is a switch.

8. The fault-tolerant computer network interface of claim 6, the interface further arranged to build a network status table that indicates results of determining the state of the first and second link between the interface and other network nodes.

9. The fault-tolerant computer network interface of claim 8, wherein the network status table comprises data representing network status based on data received at the interface from other network nodes.

10. The fault-tolerant computer network interface of claim 6, arranged to determine the state of a first and second link from the interface by determining whether each node connected to the interface can send data to the interface and can receive data from the interface over each of the first and second links.

## Patentansprüche

1. Verfahren zur Verwaltung des Zustands eines Computernetzwerks mit fehlertoleranten Netzwerkknoten (102, 103, 104, 105, 106), wobei das Verfahren die folgenden Schritte umfaßt:
in jedem fehlertoleranten Knoten wird der Zustand einer ersten Strecke zwischen jedem der fehlertoleranten Knoten und anderen Netzwerkknoten bestimmt;
in jedem fehlertoleranten Knoten wird der Zustand einer zweiten Strecke zwischen jedem der fehlertoleranten Knoten und anderen Netzwerkknoten bestimmt;
in einem ersten fehlertoleranten Zwischenknoten werden Daten von einem Ursprungsknoten empfangen; und **gekennzeichnet durch** den folgenden Schritt:
in dem ersten fehlertoleranten Zwischenknoten wird zum Senden von Daten entweder die erste Strecke oder die zweite Strecke von dem ersten fehlertoleranten Zwischenknoten zu einem Zielknoten ausgewählt, wobei die erste Strecke und/oder die zweite Strecke auf andere Weise als direkt mit dem Ursprungsknoten verbunden ist, dergestalt, daß die Strecke **durch** den Zwischenknoten auf der Basis der bestimmten Netzwerkzustände unabhängig für jeden fehlertoleranten Knoten ausgewählt wird.

2. Verfahren nach Anspruch 1, wobei der erste fehlertolerante Zwischenknoten ein Switch (102, 103) ist.

3. Verfahren nach Anspruch 1, ferner mit dem Schritt des Aufbauens einer unabhängigen Netzwerkstatustabelle in jedem fehlertoleranten Knoten (102, 103, 104, 105, 106), die Ergebnisse der Bestimmung des Zustands der ersten und der zweiten Strecke zwischen diesem Knoten und anderen Netzwerkknoten angibt.

4. Verfahren nach Anspruch 3, wobei die Netzwerkstatustabelle Daten umfaßt, die den Netzwerkstatus auf der Basis von in einem fehlertoleranten Netzwerkknoten (102, 103, 104, 105, 106) von anderen Netzwerkknoten empfangenen Daten repräsentieren.

5. Verfahren nach Anspruch 1, wobei der Schritt des Bestimmens des Zustands der ersten und zweiten Strecke von fehlertoleranten Knoten (102, 103, 104, 105, 106) umfaßt, zu bestimmen, ob jeder mit einem fehlertoleranten Knoten verbundene Knoten jeweils über die erste und die zweite Strecke Daten zu dem fehlertoleranten Knoten senden und Daten von dem fehlertoleranten Knoten empfangen kann.

6. Fehlertolerante Computernetzwerkschnittstelle für einen ersten fehlertoleranten Zwischenknoten, wobei die Schnittstelle dafür ausgelegt ist, für folgendes zu wirken:
Zustand einer ersten Strecke zwischen jedem der fehlertoleranten Knoten und anderen Netzwerkknoten bestimmt;
Bestimmen des Zustands einer ersten Strecke zwischen der Schnittstelle und anderen Netzwerkknoten;
Bestimmen des Zustands einer zweiten Strecke zwischen der Schnittstelle und anderen Netzwerkknoten;
Empfangen von Daten von einem Ursprungsknoten; und **dadurch gekennzeichnet, daß** sie für folgendes ausgelegt ist:
Auswählen entweder der ersten Strecke oder der zweiten Strecke von der Schnittstelle zu einem Zielknoten zum Senden von Daten, wobei die erste Strecke und/oder die zweite Strecke auf andere Weise als direkt mit dem Ursprungsknoten verbunden ist, dergestalt, daß die Strecke auf der Basis des bestimmten Netzwerkzustands ausgewählt wird.

7. Fehlertolerante Computernetzwerkschnittstelle nach Anspruch 6, wobei der erste fehlertolerante Zwischenknoten ein Switch ist.

8. Fehlertolerante Computernetzwerkschnittstelle nach Anspruch 6, wobei die Schnittstelle ferner dafür ausgelegt ist, eine Netzwerkstatustabelle aufzubauen, die Ergebnisse der Bestimmung des Zustands der ersten und der zweiten Strecke zwischen der Schnittstelle und anderen Netzwerkknoten angibt.

9. Fehlertolerante Computernetzwerkschnittstelle nach Anspruch 8, wobei die Netzwerkstatustabelle Daten umfaßt, die den Netzwerkstatus auf der Basis von in der Schnittstelle von anderen Netzwerkknoten empfangenen Daten repräsentieren.

10. Fehlertolerante Computernetzwerkschnittstelle nach Anspruch 6, die dafür ausgelegt ist, den Zustand einer ersten und zweiten Strecke von der Schnittstelle zu bestimmen, indem bestimmt wird, ob jeder mit der Schnittstelle verbundene Knoten jeweils über die erste und die zweite Strecke Daten zu der Schnittstelle senden und Daten von der Schnittstelle empfangen kann.

## Revendications

1. Procédé de gestion de l'état d'un réseau informatique comprenant des noeuds de réseau tolérants aux pannes (102, 103, 104, 105, 106), ledit procédé comprenant les étapes suivantes:
déterminer dans chaque noeud tolérant aux pannes l'état d'une première liaison entre chacun des noeuds tolérants aux pannes et d'autres noeuds de réseau ;
déterminer dans chaque noeud tolérant aux pannes l'état d'une seconde liaison entre chacun des noeuds tolérants aux pannes et d'autres noeuds de réseau ;
recevoir des données provenant d'un noeud d'origine dans un premier noeud intermédiaire tolérant aux pannes;
et **caractérisé par** l'étape suivante:
sélectionner dans le premier noeud intermédiaire tolérant aux pannes soit la première liaison soit la seconde liaison du premier noeud intermédiaire tolérant aux pannes à un noeud de destination dans le but d'envoyer des données, au moins l'une des première et
seconde liaisons et étant liée autrement que directement au noeud d'origine, de sorte que la liaison est sélectionnée par le noeud intermédiaire en fonction des états du réseau déterminés indépendamment pour chaque noeud tolérant aux pannes.

2. Procédé selon la revendication 1, le premier noeud intermédiaire tolérant aux pannes étant un commutateur (102, 103).

3. Procédé selon la revendication 1, comprenant en outre l'étape de construction d'une table d'états de réseau indépendante dans chaque noeud tolérant aux pannes (102, 103, 104, 105, 106) qui indique les résultats de la détermination de l'état de la première et de la seconde liaisons entre le noeud en question et d'autres noeuds du réseau.

4. Procédé selon la revendication 3, la table d'états du réseau comprenant des données représentant l'état du réseau en fonction de données reçues à un noeud de réseau tolérant aux pannes (102, 103, 104, 105, 106) à partir d'autres noeuds de réseau.

5. Procédé selon la revendication 1, l'étape de détermination de l'état d'une première et d'une seconde liaisons à partir de noeuds tolérants aux pannes (102, 103, 104, 105, 106) comprenant la détermination du fait que chaque noeud connecté à un noeud tolérant aux pannes peut ou non envoyer des données au noeud tolérant aux pannes et peut ou non recevoir des données à partir du noeud tolérant aux pannes par le biais de chacune des première et seconde liaisons.

6. Interface de réseau informatique tolérante aux pannes destinée à un premier noeud intermédiaire tolérant aux pannes, ladite interface étant disposée de manière à fonctionner pour :
déterminer l'état d'une première liaison entre l'interface et d'autres noeuds de réseau ;
déterminer l'état d'une seconde liaison entre l'interface et d'autres noeuds de réseau ;
recevoir des données provenant d'un noeud d'origine ; et
**caractérisée en ce qu'**elle est disposée de manière à :
sélectionner soit la première liaison soit la seconde liaison à partir de l'interface vers un noeud de destination dans le but d'envoyer des données, au moins l'une des première et seconde liaisons étant liée autrement que directement au noeud d'origine, de telle manière que la liaison est sélectionnée en fonction de l'état déterminé de chaque liaison.

7. Interface de réseau informatique tolérante aux pannes selon la revendication 6, le premier noeud intermédiaire tolérant aux pannes étant un commutateur.

8. Interface de réseau informatique tolérante aux pannes selon la revendication 6, l'interface étant en outre disposée de manière à construire une table d'états de réseau qui indique les résultats de la détermination de l'état de la première et de la seconde liaisons entre l'interface et d'autres noeuds de réseau.

9. Interface de réseau informatique tolérante aux pannes selon la revendication 8, la table d'états de réseau comprenant des données représentant l'état du réseau en fonction de données reçues à l'interface à partir d'autres noeuds de réseau.

10. Interface de réseau informatique tolérante aux pannes selon la revendication 6, disposée de manière à déterminer l'état d'une première et d'une seconde liaisons à partir de l'interface par la détermination du fait que chaque noeud connecté à l'interface peut ou non envoyer des données à l'interface et peut ou non recevoir des données provenant de l'interface par le biais de chacune parmi la première et la seconde liaisons.
